# EUROPEAN PATENT SPECIFICATION

(11) **EP 2 069 949 B1**
(45) Date of publication and mention of the grant of the patent: **22.08.2012**
(21) Application number: 07842364.7
(22) Date of filing: 12.09.2007
(51) Int. Cl.: H04W 8/12, H04W 60/04, H04W 76/02

(54) **DELIVERY OF MOBILE TERMINATED CALL DURING INTER-VLR LOCATION UPDATE**
ZUSTELLUNG EINES RUFS ZU EINEM MOBILEN ENDGERÄT WÄHREND EINER INTER-VLR-POSITIONSAKTUALISIERUNG
FOURNITURE D'UN APPEL TERMINE PAR UN MOBILE PENDANT UNE ACTUALISATION DE LOCALISATION INTER-VLR

(30) Priority: 12.09.2006 US 825291 P
(43) Date of publication of application: 17.06.2009
(73) Proprietor: Alcatel Lucent, 75007 Paris (FR)
(72) Inventor: ZHANG, Yibo, Shanghai 200136 (CN); TIAN, Lu, Plano, TX 75093 (US); ZHAO, Yong, Plano, TX 75024 (US); LANDAIS, Bruno, F-22560 Pleumeur-Bodou (FR)
(74) Representative: Wetzel, Emmanuelle
(86) International application number: PCT/US2007/078309
(87) International publication number: WO 2008/033951

(56) References cited:
- US-A1- 2002 169 883
- "Digital cellular telecommunications system (Phase 2+); Universal Mobile Telecommunications System (UMTS); Support of Optimal Routeing (SOR); Technical realization; Stage 2 (3GPP TS 23.079 version 6.1.0 Release 6); ETSI TS 123 079", ETSI STANDARDS, LIS, SOPHIA ANTIPOLIS CEDEX, FRANCE, vol. 3-CN2;3-CN4, no. V6.1.0, 1 December 2005 (2005-12-01), XP014032440, ISSN: 0000-0001
- "Digital cellular telecommunications system (Phase 2+); Universal Mobile Telecommunications System (UMTS); Basic Call Handling; Technical realization (3GPP TS 23.018 version 6.5.0 Release 6); ETSI TS 123 018", ETSI STANDARDS, LIS, SOPHIA ANTIPOLIS CEDEX, FRANCE, vol. 3-CN2;3-CN4, no. V6.5.0, 1 December 2005 (2005-12-01), XP014032431, ISSN: 0000-0001
- "Digital cellular telecommunications system (Phase 2+); Universal Mobile Telecommunications System (UMTS); Basic call handling; Technical realization (3GPP TS 23.018 version 7.5.0 Release 7); ETSI TS 123 018", ETSI STANDARDS, LIS, SOPHIA ANTIPOLIS CEDEX, FRANCE, vol. 3-CN2;3-CN4, no. V7.5.0, 1 June 2007 (2007-06-01), XP014037700, ISSN: 0000-0001
- ALCATEL-LUCENT: "Mobile Termination whilst the MS is moving to another MSC", 3GPP DRAFT; C4-070777, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Beijing; 20070514, 14 May 2007 (2007-05-14), XP050037868, [retrieved on 2007-05-14]

## Description

### CROSS-REFERENCE TO RELATED APPLICATIONS

This U.S. Nonprovisional Application for Patent claims the benefit of the filing date of U.S. Provisional Patent Application entitled, 2^{nd} SRI Solutions (with/without OR) to the Mobile Termination Call During the Inter-VLR Location Update, Attorney Docket No. 800295, having Serial No. 60/825,291, filed on September 12, 2006.

### BACKGROUND OF THE INVENTION

### Technical Field of the Invention

The present invention relates in general to wireless communication systems, and in particular, to handling of mobile terminated calls during location updates.

### Description of Related Art

Today' s wireless telecommunications networks provide telephone subscribers with the ability to access telecommunications services from almost anywhere in the world. The key to facilitating such world-wide access is mobility management. With mobility management, wireless networks are able to track the location of mobile subscribers so that mobile services can be delivered to them.

A wireless network is typically formed of a number of cells, each covering a small geographic area within which a mobile device, such as a mobile station, may receive mobile services. Each cell is equipped with a base station that provides radio coverage to the cell, thereby enabling communication with mobile devices located within the cell. By integrating the coverage of multiple base stations, a wireless network is able to provide radio coverage to mobile subscribers over a large geographic area.

The coverage area of a collection of neighboring base stations is commonly referred to as a location area. Each location area is served by a mobile switching center/visitor location register (MSC/VLR), and each MSCNLR may serve multiple location areas. The MSCNLR is the network node that provides circuit-switched calling, mobility management and other telecommunications/mobile services to mobile subscribers. In particular, the MSCNLR maintains subscriber data for all mobile subscribers that are currently located within one of the location areas served by the MSCNLR. For example, the subscriber data for each mobile subscriber typically includes the location area and serving base station of the mobile subscriber, which allows the MSCNLR to page, communicate with and connect incoming calls to that mobile subscriber.

When a mobile subscriber moves or "roams" into a new location area, the mobile subscriber must inform the wireless network of the change in location area by performing what is commonly referred to as a location update procedure. Each mobile device is responsible for maintaining the location area code (LAC) of the current location area and comparing the stored LAC with subsequent LAC's that are broadcast and received by the mobile device. If the mobile device finds that the received LAC is different from the stored LAC, the mobile device sends a location update request to the wireless network. If the new location area is served by a different MSCNLR than the previous location area, an inter-VLR location update is performed.

During the inter-VLR location update, the new MSCNLR that receives the location update request from the mobile subscriber transmits an update location message to the Home Location Register (HLR) of the mobile subscriber. The HLR is a database that maintains permanent subscriber records for mobile subscribers. Upon receiving the update location message, the HLR forwards the subscriber data associated with the mobile subscriber to the new MSCNLR for temporary storage in the new MSCNLR while the mobile subscriber is within the MSCNLR coverage area and updates its records to indicate that the mobile subscriber is now present in a location area served by the new MSCNLR. In addition, the HLR asks the old MSCNLR to delete its subscriber record for this mobile subscriber since the mobile subscriber is no longer located in a location area served by the old MSCNLR.

Once the location update procedure is complete, the mobile subscriber can continue to receive mobile services through the new MSCNLR. For example, in a typical mobile terminated call scenario, an incoming call to the mobile subscriber is first routed to a gateway mobile switching center (GMSC) serving the wireless network of the mobile subscriber. Upon receiving the mobile terminated call, the GMSC queries the HLR to determine the current location of the mobile subscriber. For example, the HLR typically returns routing information to the GMSC that includes the identity of the MSC/VLR serving the mobile subscriber. The GMSC uses the routing information to route the mobile terminated call to the MSCNLR. The MSCNLR accesses its subscriber data for the mobile subscriber to determine the location area of the mobile subscriber, and pages the mobile device of the mobile subscriber within that location area to set-up a call connection to the mobile device for the mobile terminated call.

Methods and apparatuses for re-routing mobile terminated calls are known from "Digital cellular telecommunications system (Phase 2+); Universal Mobile Telecommunications Systems (UMTS); Support of Optimal Routeing (SOR); Technical realization; Stage 2 (3GPP TS 23.079 version 6.1.0 Release 6); ETSI TS 123 079, ETSI STANDARDS, LIS, SOPHIA ANTIPOLIS CEDEX, FRANCE, vol. 3-CN2; 3-CN4, no. V6.1.0, 1 December 2005 (2005-12-01), and from

"Digital cellular telecommunications system (Phase 2+); Universal Mobile Telecommunications System (UMTS); Basic Call Handling; Technical realization (3GPP TS 23.018 version 6.5.0 Release 6); ETSI TS 123 018, vol. 3-CN2; 3-CN4, no. V6.5.0, 1 December 2005 (2005-12-01).

Furthermore, methods and apparatuses for re-routing mobile terminated calls are described in

"Digital cellular telecommunications systems (Phase 2+); Universal Mobile Telecommunications System (UMTS); Basic call handling; Technical realization (3GPP TS 23.018 version 7.5.0 Release 7); ETSI TS 123 018, ETSI STANDARDS, LIS, SOPHIA ANTIPOLIS CEDEX, FRANCE, vol. 3-CN2; 3-CN4, no. V7.5.0, 1 June 2007 (2007-06-01), and in

ALCATEL-LUCENT: "Mobile Termination whilst the MS is moving to another MSC", 3GPP DRAFT; C4-070777, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. CT WG4, no. Beijing; 20070514, 14 May 2007 (2007-05-14).

The aforementioned documents specify several methods for delivering incoming mobile terminated calls. They describe how mobile terminated calls can be handled when it is realized by the old MSC/VLR that the mobile station has roamed into another area which is served by a new MSC/VLR.

However, if the mobile terminated call is received during the time that the mobile subscriber is performing an inter-VLR location update, the mobile terminated call may not be completed to the mobile subscriber. For example, if the HLR has not yet been informed of the change in location when the GMSC queries the HLR for routing information, the HLR will return the routing information for the old MSCNLR to the GMSC. Thus, the GMSC will route the call to the old MSC/VLR, and the old MSC/VLR will attempt to page the mobile station. However, since the mobile subscriber is no longer in the MSC/VLR area, the mobile device will not be able to answer the page. Currently, when a mobile device does not answer a page for a mobile terminated call, the call is rejected, and therefore is not delivered to the mobile subscriber. Instead, other call handling, such as voice mail, is applied to the mobile terminated call. This is dissatisfactory for many mobile subscribers and network providers.

Therefore, what is needed is mechanism for delivering mobile terminated calls to mobile subscribers during inter-VLR location updates.

### SUMMARY OF THE INVENTION

Embodiments of the present invention provide a method and apparatus for delivering a mobile terminated call to a mobile device communicating with a wireless communication network. The apparatus comprises means for receiving said mobile terminated call for said mobile device, said mobile terminated call having old routing information associated therewith that identifies an old mobile switching center/visitor location register (MSC/VLR) previously serving said mobile device. The apparatus further comprises means for determining if said mobile device is performing a location update to a new MSC/VLR prior to connection of said mobile terminated call to said mobile device; and means for enabling said mobile terminated call to be routed to said new MSC/VLR for connection of said mobile terminated call to said mobile device.

The method includes receiving the mobile terminated call, in which the mobile terminated call has old routing information associated therewith that identifies an old mobile switching center/visitor location register (MSC/VLR) previously serving the mobile device, determining that the mobile device is performing a location update to a new MSC/VLR prior to connection of the mobile terminated call and enabling the mobile terminated call to be routed to the new MSC/VLR for connection of the mobile terminated call to the mobile device.

In one embodiment, the old MSC/VLR determines that the mobile device is performing a location update to the new MSC/VLR by receiving a cancel location message from a Home Location Register (HLR) associated with the mobile device. In an exemplary embodiment, upon receiving the cancel location message, the old MSC/VLR determines new routing information for the mobile terminated call that identifies the new

MSCNLR and routes the mobile terminated call to the new MSC/VLR for connection of the mobile terminated call to the mobile device.

In another exemplary embodiment, upon receiving the cancel location message, the old MSC/VLR sends a resume call handling (RCH) message to a gateway mobile switching center (GMSC) that originally routed the mobile terminated call to the old MSC/VLR. The RCH message including a roaming retry indicator instructing the GMSC to re-route the mobile terminated call to the new MSC/VLR. In a further exemplary embodiment, the GMSC determines new routing information for the mobile terminated call that identifies the new MSC/VLR and routes the mobile terminated call to the new MSC/VLR for connection of the mobile terminated call to the mobile device.

### BRIEF DESCRIPTION OF THE DRAWINGS

A more complete understanding of the present invention may be obtained by reference to the following detailed description when taken in conjunction with the accompanying drawings wherein:
FIGURE 1 is a block diagram illustrating an exemplary wireless network for delivering a mobile terminated call to a mobile station during an inter-VLR location update, in accordance with embodiments of the present invention;
FIGURE 2 is a flowchart illustrating an exemplary process for delivering a mobile terminated call to a mobile station during an inter-VLR location update, in accordance with embodiments of the present invention;
FIGURE 3 is a block diagram illustrating one embodiment for delivering a mobile terminated call to a mobile station during an inter-VLR location update;
FIGURE 4 is a flowchart illustrating an exemplary process for delivering a mobile terminated call to a mobile station during an inter-VLR location update according to the embodiment shown in FIGURE 3;
FIGURE 5 is a signaling diagram illustrating exemplary signaling for delivering a mobile terminated call to a mobile station according to the embodiment shown in FIGURE 3;
FIGURE 6 is a block diagram illustrating another embodiment for delivering a mobile terminated call to a mobile station during an inter-VLR location update;
FIGURE 7 is a flowchart illustrating an exemplary process for delivering a mobile terminated call to a mobile station during an inter-VLR location update according to the embodiment shown in FIGURE 6; and
FIGURES 8A and 8B are signaling diagrams illustrating exemplary signaling for delivering a mobile terminated call to a mobile station according to the embodiment shown in FIGURE 6.

### DETAILED DESCRIPTION OF THE DRAWINGS

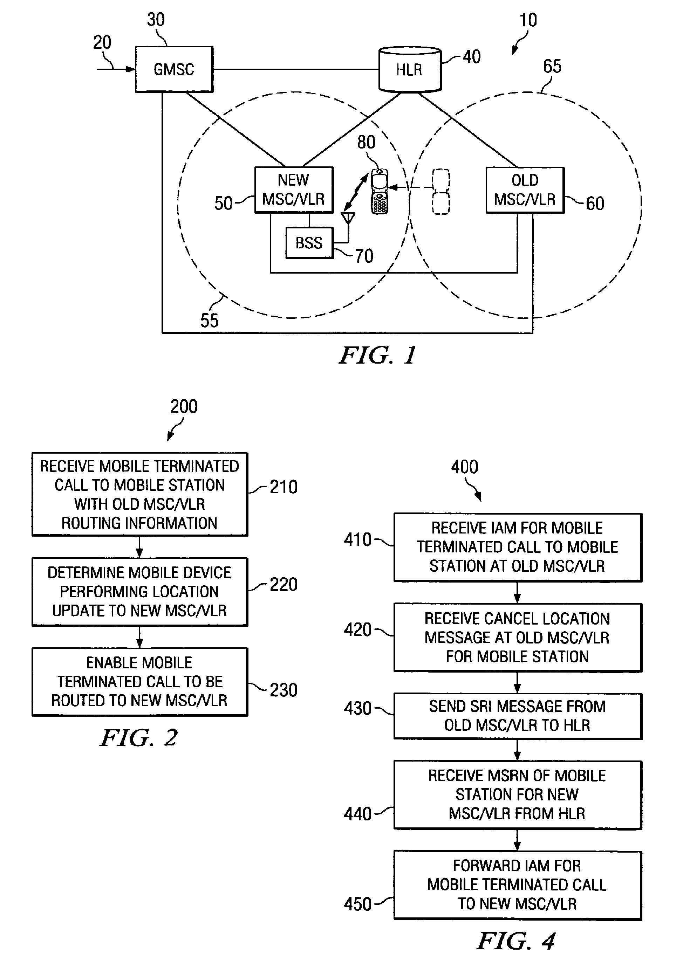

FIGURE 1 is a block diagram illustrating an exemplary wireless network 10 for delivering a mobile terminated call 20 to a mobile station 80 during an inter-VLR location update, in accordance with embodiments of the present invention. The wireless network 10 includes a Gateway Mobile Switching Center (GMSC) 30, Mobile Switching Center/Visitor Location Registers (MSCNLR) 50 and 60, Base Station System (BSS) 70 and Home Location Register (HLR) 40. MSCNLR 50 serves location area 55, while MSCNLR 60 serves location area 65. It should be understood that each MSCNLR 50 and 60 may serve multiple location areas. However, for simplicity, only one location area for each MSCNLR is shown.

As illustrated in FIGURE 1, mobile station 80 has recently moved from location area 65 served by MSCNLR 60 into location area 55 served by MSCNLR 50. Thus, MSCNLR 60 is labeled "old MSC/VLR", while MSCNLR 50 is labeled "new MSC/VLR." Once the mobile station 80 realizes that it has roamed into the new location area 55 served by the new MSCNLR 50 (i.e., by determining that the location area code (LAC) received from BSS 70 is new), the mobile station 80 sends a location update request to the new MSCNLR 50 via BSS 70.

Upon receiving the location update request, the new MSCNLR 50 transmits an update location message to the HLR 40 to retrieve the subscriber data associated with the mobile station 80 and to update the HLR 40 with the new location area 55 served by the new MSCNLR 50. In addition, the HLR 40 transmits a cancel location message to the old MSCNLR 60 instructing the old MSCNLR 60 to delete the mobile station's 80 subscriber data from its records since the mobile station 80 is no longer located in the location area 65 served by the old MSCNLR 60.

If an incoming mobile terminated call 20 for the mobile station 80 is received at the GMSC 30 during the location update process, as in conventional wireless networks, the GMSC 30 queries the HLR 40 for routing information to deliver the incoming call to the mobile station 80. If the HLR 40 has not yet received the update location message from the new MSCNLR 50 when the GMSC query is received, the HLR 40 returns the routing information for the old MSCNLR 60 to the GMSC 30. Thus, the GMSC routes the mobile terminated call 20 to the old MSCNLR 60 for call handling.

When the old MSCNLR 60 receives the call 20, the old MSCNLR 60 accesses its subscriber data for the mobile subscriber to determine the location area 65 of the mobile station 80, and pages the mobile station 80 within that location area 65 to attempt to set-up a call connection to the mobile station 80 for the mobile terminated call. However, since the mobile station 80 has moved out of location area 65 and into location area 55, and is currently performing a location update to the new MSCNLR 50, the mobile station 80 will not be able to answer the page from the old MSCNLR.

Therefore, in accordance with embodiments of the present invention, once the old MSCNLR 60 receives the cancel location message from the HLR 40 that requests the old MSCNLR 60 to delete the subscriber record for mobile station 80, the MSC/VLR 60 stops paging the mobile station 80 and redirects the call 20 to enable the call 20 to be routed to the new MSCNLR 50 and ultimately delivered to the mobile station 80 upon completion of the location update. For example, in one embodiment, the old MSC/VLR 60 queries the HLR 40 for new routing information for the mobile station 80, and uses the new routing information to forward the call to the new MSCNLR 50. In another embodiment, the old MSCNLR 60 releases the call back to the GMSC 30. The GMSC 30, in turn, re-queries the HLR 40 for new routing information for the mobile station 80 and uses the new routing information to re-route the call to the new MSCNLR 50.

Turning now to FIGURE 2, an exemplary process 200 for delivering a mobile terminated call to a mobile station during an inter-VLR location update is shown. Initially, at block 210, a mobile terminated call to a mobile station is received with routing information identifying the old MSCNLR as the serving MSCNLR. For example, in one embodiment, the mobile terminated call is received at the old MSCNLR from the GMSC. In another embodiment, the mobile terminated call is received at the GMSC after being re-routed back to the GMSC from the old MSCNLR. In addition, at block 220, a determination is made that the mobile station is currently performing a location update to a new MSCNLR (e.g., by receiving a cancel location message at the old MSCNLR or by releasing the call back to the GMSC). Thereafter, at block 230, the mobile terminated call is routed to the new MSCNLR either directly from the old MSCNLR or from the GMSC, as will be described in further detail below.

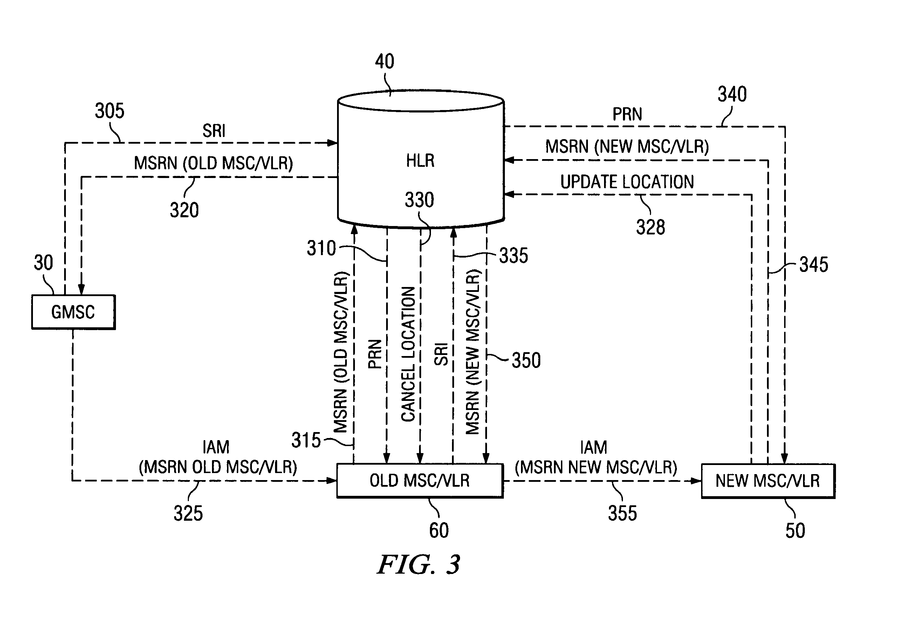

FIGURE 3 is a block diagram illustrating one embodiment for delivering a mobile terminated call to a mobile station during an inter-VLR location update. In FIGURE 3, the mobile terminated call is routed from the old MSCNLR 60 to the new MSCNLR 50 for delivery of the call to the mobile station. Initially, when the GMSC 30 first receives the incoming mobile terminated call from the network, the GMSC 30 sends a Send Routing Information (SRI) message 305 to the HLR 40. The HLR 40 accesses the subscriber record for the mobile station to determine the serving MSCNLR, here the old MSC/VLR 60, and transmits a Provide Roaming Number (PRN) message 310 to the old MSCNLR 60. In response to the PRN message, the old MSC/VLR 60 sends a message 315 including a Mobile Station Roaming Number (MSRN) back to the HLR 40. The MSRN is an E.164 number that is temporarily assigned to the mobile station for the mobile terminated call and can be used to route the mobile terminated call to the old MSC/VLR 60. Upon receipt of the MSRN, the HLR 40 forwards the MSRN in another message 320 back to the GMSC 30. The GMSC 30 uses the MSRN to route an Initial Address Message (IAM) 325 for the mobile terminated call to the old MSC/VLR 60.

At the same time that the GMSC 30 is retrieving the MSRN from the HLR 40 and transmitting the IAM 325 to the old MSC/VLR 60, as shown in FIGURE 3, the new MSC/VLR 50 is transmitting an update location message 328 for the mobile station to the HLR 40. As a result, the HLR 40 transmits a cancel location message 330 to the old MSC/VLR 60. In accordance with embodiments of the present invention, upon receiving the cancel location message 330 from the HLR 40, the old MSC/VLR 60 transmits a second Send Routing Information (SRI) message 335 to the HLR 40 for the mobile terminated call. This time, since the mobile station has performed the location update to the new MSC/VLR 50, the HLR 40 sends a Provide Roaming Number (PRN) message 340 to the new MSC/VLR 50 to retrieve a new MSRN in message 345 for the mobile terminated call from the new MSC/VLR 50. The HLR 40 forwards the MSRN for the new MSC/VLR 50 in message 350 to the old MSCNLR 60, and the old MSC/VLR 60 uses the received MSRN to route an IAM 355 for the mobile terminated call to the new MSC/VLR 50.

FIGURE 4 is a flowchart illustrating an exemplary process 400 for delivering a mobile terminated call to a mobile station during an inter-VLR location update according to the embodiment shown in FIGURE 3. When, at block 410, an IAM for a mobile terminated call to a mobile station is received at an old MSCNLR, and at block 420, a cancel location message for the mobile station is also received at the old MSCNLR, at block 430, the old MSCNLR sends an SRI message to the HLR to retrieve the MSRN of the mobile station for the new MSCNLR. Upon receiving the MSRN at block 440, at block 450, the old MSCNLR uses the MSRN to forward the IAM for the mobile terminated call to the new MSCNLR.

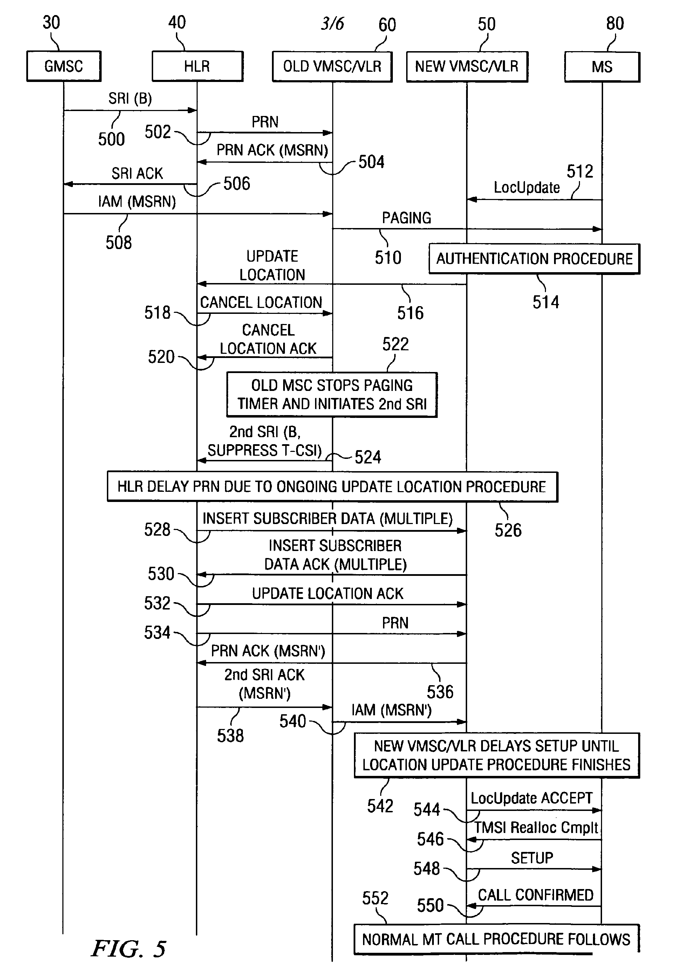

FIGURE 5 is a signaling diagram illustrating exemplary signaling for delivering a mobile terminated call to a mobile station according to the embodiment shown in FIGURE 3. As described above in connection with FIGURE 3, when the GMSC 30 receives a mobile terminated call for a mobile station, at 500, the GMSC 30 transmits a Send Routing Information (SRI) message to the HLR 40 to retrieve routing information for routing of the call to the serving MSCNLR. The HLR 40 accesses the subscriber record for the mobile station to identify the serving MSCNLR (i.e., old MSCNLR 60) and transmits a Provide Roaming Number (PRN) message at 502 to the old MSCNLR 60.

In response, the old MSCNLR 60 transmits a PRN acknowledgment message at 504 back to the HLR that includes a Mobile Station Roaming Number (MSRN) for the mobile terminated call. The HLR 40 forwards the MSRN to the GMSC 30 in an SRI acknowledgment message at 506. Using the received MSRN, the GMSC 30 generates and transmits an Initial Address Message (IAM) at 508 for the call to the old MSCNLR 60. Upon receipt of the IAM, the old MSCNLR accesses the temporary subscriber record for the mobile station to determine the location area within which the mobile station last reported it was located, and at 510, pages the mobile station within that location area.

Prior to paging by the old MSCNLR 60, the mobile station 80 transmits a location update request at 512 to the new MSCNLR 50. After authentication of the mobile station 80 at 514, the new MSCNLR 50 transmits an update location message at 516 to the HLR 40 to update the HLR 40 with the new location (i.e., new MSCNLR identity and/or new location area) of the mobile station 80. Upon receiving the update location message, the HLR 40 transmits a cancel location message at 518 to the old MSCNLR 60, requesting the old MSCNLR to delete the temporary subscriber record for the mobile station. Once the old MSCNLR deletes the subscriber record for the mobile station, the old MSCNLR transmits a cancel location acknowledgement message at 520 back to the HLR 40.

In addition, in accordance with embodiments of the present invention, at 522, the old MSCNLR stops paging the mobile station (e.g., by stopping the paging timer for the mobile station) and initiates a second SRI message at 524 for the mobile terminated call to the HLR 40. In other embodiments, if the cancel location message is received during the pre-paging (i.e., before PRN ACK at 504), the old MSCNLR 60 stops paging and returns the PRN acknowledgement message (at 504) to the HLR 40 with an indication that the mobile subscriber is absent (i.e., "Absent Subscriber"). In this case, the HLR 40 re-transmits the PRN message to the new MSCNLR 50, and sends the MSRN associated with the new MSCNLR 50 back to the GMSC 30. In yet another embodiment, if the cancel location message is received before the IAM arrives but after the PRN ACK is sent, the old MSCNLR 60 triggers the second SRI message to the HLR 40 at Send Info for Incoming Call. In still another embodiment, if the cancel location message is received before paging, but after the Send Info for Incoming Call message, the old MSCNLR 60 triggers the second SRI message to the HLR 40 without paging.

When the HLR 40 receives the second SRI message for the mobile terminated call from the old MSCNLR 60 at 524, if the HLR is still processing the location update for the mobile station, at 526, the HLR 40 delays sending out the Provide Roaming Number (PRN) message to the new MSCNLR 50 until the location update is complete. For example, as shown at 528, multiple insert subscriber data messages are sent from the HLR 40 to the new MSCNLR 50 during the location update process to provide the new MSCNLR with the subscriber data associated with the mobile station 80. In addition, each time the new MSCNLR 50 receives subscriber data for the mobile station from the HLR 40, the new MSCNLR 50 provides an insert subscriber data acknowledgement message at 530 back to the HLR 40.

Once all of the subscriber data for the mobile station has been sent to the new MSCNLR 50, and the location update is complete, the HLR 40 transmits an update location acknowledgement message at 532 to the new MSCNLR 50. Afterwards, the HLR 40 is able to transmit a Provide Roaming Number (PRN) message at 534 to the new MSCNLR 50. In response, the new MSCNLR 50 transmits a PRN acknowledgment message at 536 back to the HLR 40 that includes a new Mobile Station Roaming Number (MSRN) for the mobile terminated call. The HLR 40 forwards the new MSRN to the old MSCNLR 60 in a second SRI acknowledgment message at 538. Using the received new MSRN, the old MSCNLR 60 generates and transmits an Initial Address Message (IAM) at 540 for the call to the new MSCNLR 50.

At 542, the new MSCNLR 50 delays setup of the call to the mobile station until the location update procedure finishes. For example, the new MSCNLR 50 may need to transmit a location update accept message at 544 that assigns a new Temporary Mobile Subscriber Identity (TMSI) to the mobile station for the new MSCNLR 50. In addition, at 546, the mobile station 80 may need to reply back that the TMSI allocation has been completed. Thereafter, the new MSCNLR can use the existing connection (used for location update) to the mobile station 80 or page the mobile station 80 and at 548 transmit a call setup message to the mobile station. At 550, a call confirmation message is transmitted back to the new MSCNLR 50 from the mobile station 80. Normal mobile terminated call procedure follows at 552 to connect the mobile terminated call to the mobile station 80.

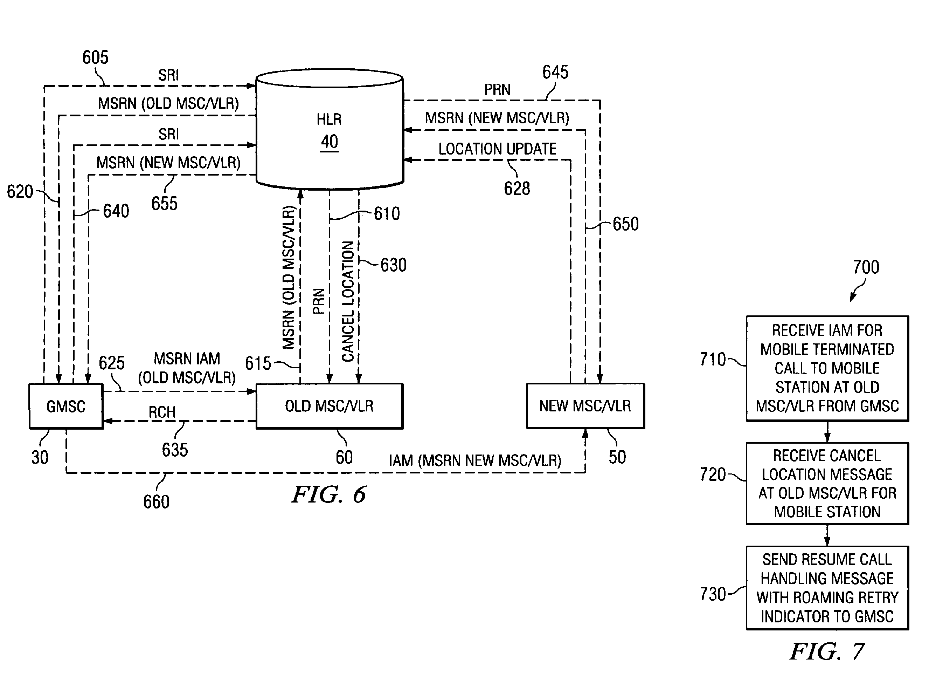

FIGURE 6 is a block diagram illustrating another embodiment for delivering a mobile terminated call to a mobile station during an inter-VLR location update. In FIGURE 6, the mobile terminated call is routed back to the GMSC 30 from the old MSCNLR 60, and re-routed from the GMSC 30 to the new MSCNLR 50 for delivery of the call to the mobile station. As in FIGURE 3, in FIGURE 6, when the GMSC 30 first receives the incoming mobile terminated call from the network, the GMSC 30 sends a Send Routing Information (SRI) message 605 to the HLR 40. The HLR 40 accesses the subscriber record for the mobile station to determine the serving MSCNLR, here the old MSCNLR 60, and transmits a Provide Roaming Number (PRN) message 610 to the old MSCNLR 60. In response to the PRN message, the old MSCNLR 60 sends a message 615 including a Mobile Station Roaming Number (MSRN) for the mobile terminated call to be used in routing to the old MSCNLR 60 back to the HLR 40. Upon receipt of the MSRN, the HLR 40 forwards the MSRN in another message 620 back to the GMSC 30. The GMSC 30 uses the MSRN to route an Initial Address Message (IAM) 625 for the mobile terminated call to the old MSCNLR 60.

At the same time that the GMSC 30 is retrieving the MSRN from the HLR 40 and transmitting the IAM 625 to the old MSCNLR 60, as shown in FIGURE 6, the new MSCNLR 50 is transmitting an update location message 628 for the mobile station to the HLR 40. As a result, the HLR 40 transmits a cancel location message 630 to the old MSCNLR 60. In accordance with embodiments of the present invention, upon receiving the cancel location message 630 from the HLR 40, the old MSCNLR 60 transmits a resume call handling (RCH) message 635 back to the HLR 40. The RCH message 635 includes a call reference number that identifies the mobile terminated call and a roaming retry indicator that instructs the GMSC 30 to obtain a new MSRN and re-route the mobile terminated call.

Therefore, the GMSC 30 sends a second Send Routing Information (SRI) message 640 to the HLR 40 for the mobile terminated call. This time, since the mobile station has performed the location update to the new MSCNLR 50, the HLR 40 sends a Provide Roaming Number (PRN) message 645 to the new MSCNLR 50 to retrieve a new MSRN in message 650 for the mobile terminated call from the new MSCNLR 50. The HLR 40 forwards the MSRN for the new MSCNLR 50 in message 655 to the GMSC 30, and the GMSC 30 uses the received MSRN to route an IAM 660 for the mobile terminated call to the new MSCNLR 50.

FIGURE 7 is a flowchart illustrating an exemplary process 700 for delivering a mobile terminated call to a mobile station during an inter-VLR location update according to the embodiment shown in FIGURE 6. As shown in FIGURE 7, when, at block 710, an IAM for a mobile terminated call to a mobile station is received at an old MSCNLR from the GMSC, and at block 720, a cancel location message for the mobile station is also received at the old MSCNLR, at block 730, the old MSCNLR sends an Resume Call Handling (RCH) message with the roaming retry indicator back to the GMSC, which instructs the GMSC to obtain a new MSRN associated with the new MSCNLR and to re-route the mobile terminated call to the new MSCNLR using the new MSRN.

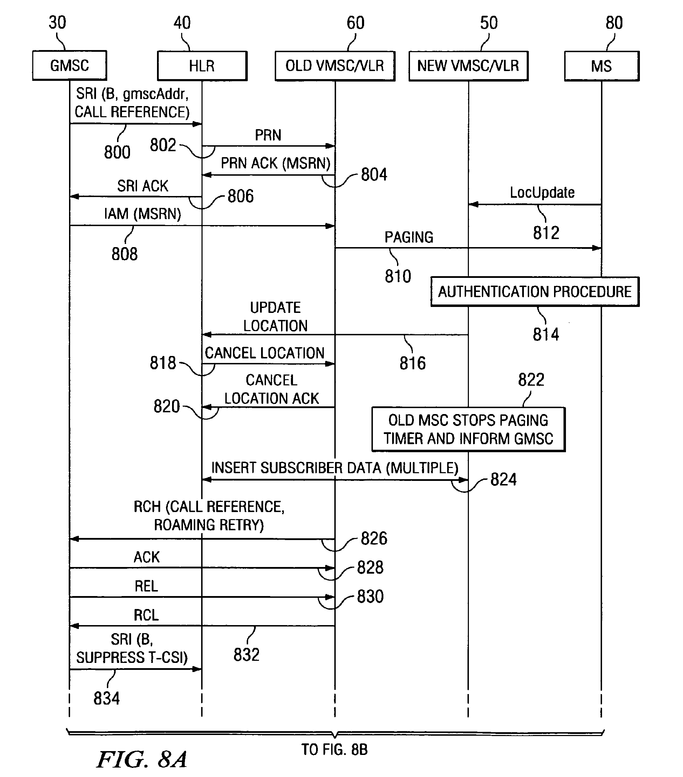

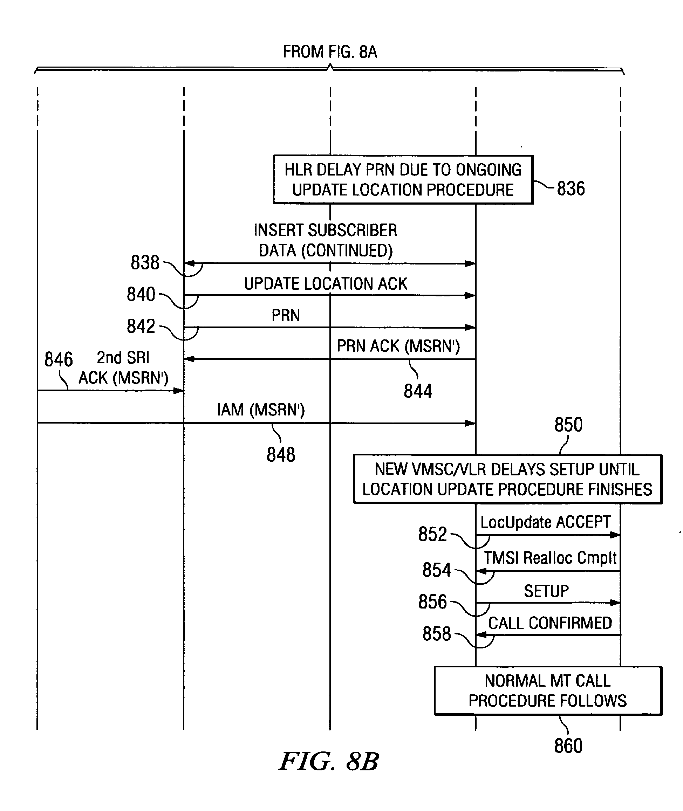

FIGURES 8A and 8B are signaling diagrams illustrating exemplary signaling for delivering a mobile terminated call to a mobile station according to the embodiment shown in FIGURE 6. As described above in connection with FIGURE 6, when the GMSC 30 receives a mobile terminated call for a mobile station, at 800, the GMSC 30 transmits a Send Routing Information (SRI) message with the address of the GMSC 30 and a call reference for the mobile terminated call to the HLR 40 to retrieve routing information for routing of the call to the serving MSCNLR. The HLR 40 accesses the subscriber record for the mobile station to identify the serving MSCNLR (i.e., old MSCNLR 60) and transmits a Provide Roaming Number (PRN) message at 802 to the old MSCNLR 60.

In response, the old MSCNLR 60 transmits a PRN acknowledgment message at 804 back to the HLR 40 that includes a Mobile Station Roaming Number (MSRN) for the mobile terminated call. The HLR 40 forwards the MSRN to the GMSC 30 in an SRI acknowledgment message at 806. Using the received MSRN, the GMSC 30 generates and transmits an Initial Address Message (IAM) at 808 for the call to the old MSCNLR 60. Upon receipt of the IAM, the old MSCNLR 60 accesses the temporary subscriber record for the mobile station to determine the location area within which the mobile station last reported it was located, and at 810, pages the mobile station within that location area.

Prior to paging by the old MSCNLR 60, the mobile station 80 transmits a location update request at 812 to the new MSCNLR 50. After authentication of the mobile station 80 at 814, the new MSCNLR 50 transmits an update location message at 816 to the HLR 40 to update the HLR 40 with the new location (i.e., new MSCNLR identity and/or new location area) of the mobile station 80. Upon receiving the update location message, the HLR 40 transmits a cancel location message at 818 to the old MSCNLR 60, requesting the old MSCNLR to delete the temporary subscriber record for the mobile station. Once the old MSCNLR 60 deletes the subscriber record for the mobile station, the old MSCNLR 60 transmits a cancel location acknowledgement message at 820 back to the HLR 40.

In addition, in accordance with embodiments of the present invention, at 822, the old MSCNLR stops paging the mobile station (e.g., by stopping the paging timer for the mobile station) and informs the GMSC 30 that the mobile station has roamed into a new location area served by a new MSCNLR 50. In particular, the old MSCNLR 60 transmits a resume call handling (RCH) message at 826 to the GMSC 30. The RCH message includes the call reference identifying the mobile terminated call and a roaming retry indicator that informs the GMSC 30 that a new MSRN is needed for the mobile terminated call. An example of the parameters within the RCH message is shown below in Table 1.

**Table 1: MAP_RESUME_CALL_HANDLING parameters**

| **Parameter name** | **Request** | **Indication** | **Response** | **Confirm** |
|---|---|---|---|---|
| **Invoke Id** | **M** | **M(=)** | **M(=)** | **M(=)** |
| **Call Reference Number** | **C** | **C(=)** | | |
| Basic Service Group | C | C(=) | | |
| Basic Service Group 2 | C | C(=) | | |
| IMSI | C | C(=) | | |
| Forwarding Data | C | C(=) | | |
| CUG Interlock | C | C(=) | | |
| CUG Outgoing Access | C | C(=) | | |
| O-CSI | C | C(=) | | |
| D-CSI | C | C(=) | | |
| CCBS Target | C | C(=) | | |
| UU Data | C | C(=) | | |
| UUS CF Interaction | C | C(=) | | |
| **All Information Sent** | **C** | **C(=)** | | |
| MSISDN | C | C(=) | | |
| **RoamingRetry** | **C** | **C(=)** | | |
| User error | | | C | C(=) |
| Provider error | | | | O |

Although in FIGURE 8A, the call redirection is handled by the old MSCNLR after receipt of the IAM at 808, in other embodiments, if the cancel location message is received during the pre-paging (i.e., before PRN ACK at 804), the old MSCNLR 60 stops paging and returns the PRN acknowledgement message (at 804) to the HLR 40 with an indication that the mobile subscriber is absent (i.e., "Absent Subscriber"). In this case, the HLR 40 re-transmits the PRN message to the new MSCNLR 50, and sends the MSRN associated with the new MSCNLR 50 back to the GMSC 30. In yet another embodiment, if the cancel location message is received before the IAM arrives but after the PRN ACK is sent, the old MSCNLR 60 triggers the RCH with roaming retry to the GMSC during the Send Info for Incoming Call after the IAM is received. In still another embodiment, if the cancel location message is received before paging, but after the Send Info for Incoming Call message, the old MSCNLR 60 triggers the RCH instead of paging.

In any case, when the GMSC 30 receives the RCH message from the old MSCNLR 60, the GMSC 30 transmits an RCH acknowledgement message at 828 back to the old MSCNLR 60. In addition, at 830, the GMSC 30 instructs the old MSCNLR 60 to release the call, and in response, the old MSC/VLR 60 releases the call and at 832 transmits a release complete message back to the GMSC. Thereafter, the GMSC 30 transmits a second SRI message for the mobile terminated call at 834 to the HLR 40. When the HLR 40 receives the second SRI message from the GMSC at 834, if as shown in FIGURE 8B, the HLR 40 is still processing the location update for the mobile station, at 836, the HLR 40 delays sending out the Provide Roaming Number (PRN) message to the new MSCNLR 50 until the location update is complete. For example, as shown at 824 and 838, multiple insert subscriber data messages are sent from the HLR 40 to the new MSCNLR 50 during the location update process to provide the new MSCNLR with the subscriber data associated with the mobile station 80. In addition, each time the new MSCNLR 50 receives subscriber data for the mobile station from the HLR 40, the new MSCNLR 50 provides an insert subscriber data acknowledgement message back to the HLR 40.

Once all of the subscriber data for the mobile station has been sent to the new MSCNLR 50, and the location update is complete, the HLR 40 transmits an update location acknowledgement message at 840 to the new MSCNLR 50. Afterwards, the HLR 40 is able to transmit a Provide Roaming Number (PRN) message at 842 to the new MSCNLR 50. In response, the new MSCNLR 50 transmits a PRN acknowledgment message at 844 back to the HLR 40 that includes a new Mobile Station Roaming Number (MSRN) for the mobile terminated call. The HLR 40 forwards the new MSRN to the GMSC 30 in a second SRI acknowledgment message at 846. Using the received new MSRN, the GMSC 30 generates and transmits an Initial Address Message (IAM) at 848 for the call to the new MSCNLR 50.

At 850, the new MSCNLR 50 delays setup of the call to the mobile station until the location update procedure finishes. For example, the new MSCNLR 50 may need to transmit a location update accept message at 852 that assigns a new Temporary Mobile Subscriber Identity (TMSI) to the mobile station for the new MSCNLR 50. In addition, at 854, the mobile station 80 may need to reply back that the TMSI allocation has been completed. Thereafter, the new MSCNLR can use the existing connection (used for location update) to the mobile station 80 or page the mobile station 80 and at 856 transmit a call setup message to the mobile station. At 858, a call confirmation message is transmitted back to the new MSCNLR 50 from the mobile station 80. Normal mobile terminated call procedure follows at 860 to connect the mobile terminated call to the mobile station 80.

As will be recognized by those skilled in the art, the innovative concepts described in the present application can be modified and varied over a wide range of applications. Accordingly, the scope of patents subject matter should not be limited to any of the specific exemplary teachings discussed, but is instead defined by the following claims.

## Claims

1. An apparatus for enabling delivery of a mobile terminated call (20) to a mobile device (80) communicating with a wireless communication network (10), said apparatus comprising:
means for receiving said mobile terminated call (20) for said mobile device (80), said mobile terminated call (20) having old routing information associated therewith that identifies an old mobile switching center/visitor location register (MSCNLR) (60) previously serving said mobile device (80); **characterized in that** said apparatus comprises
means for determining if said mobile device (80) is performing a location update to a new MSCNLR (50) prior to connection of said mobile terminated call (20) to said mobile device (80); and
means for enabling said mobile terminated call (20) to be routed to said new MSC/VLR (60) for connection of said mobile terminated call (20) to said mobile device (80).

2. The apparatus of Claim 1, wherein said apparatus is said old MSC/VLR (60).

3. The apparatus of Claim 1, wherein said means for determining said mobile device (80) is performing a location update to said new MSC/VLR (50) further comprises:
means for receiving a cancel location message (330, 630) from a Home Location Register (HLR) (40) associated with said mobile device (80).

4. The apparatus of Claim 3, wherein said means for enabling said mobile terminated call (20) to be routed to said new MSCNLR (50) further comprises:
means for determining new routing information for said mobile terminated call (20) that identifies said new MSC/VLR (50); and
means for routing said mobile terminated call (20) to said new MSC/VLR (50) for connection of said mobile terminated call (20) to said mobile device (80).

5. The apparatus of Claim 3, wherein said means for enabling said mobile terminated call (20) to be routed to said new MSCNLR (50) further comprises:
means for sending a resume call handling (RCH) message (635) to a gateway mobile switching center (GMSC) (30) that originally routed said mobile terminated call (20) to said old MSC/VLR (60), said RCH message (635) including a roaming retry indicator instructing said GMSC (30) to re-route said mobile terminated call (20) to said new MSC/VLR (50); and
means for releasing said mobile terminated call (20).

6. The apparatus of Claim 1, wherein said apparatus is a gateway mobile switching center (GMSC) (30) in communication with said old MSCNLR (60) and said new MSCNLR (50).

7. The apparatus of Claim 6, wherein said means for determining said mobile device (80) is performing a location update to said new MSC/VLR (50) further comprises:
means for receiving a resume call handling (RCH) message (635) from said old MSC/VLR (60), said RCH message (635) including a roaming retry indicator instructing said GMSC (30) to re-route said mobile terminated call (20) to said new MSC/VLR (50).

8. The apparatus of Claim 7, wherein said means for enabling said mobile terminated call (20) to be routed to said new MSCNLR (50) further comprises:
means for determining new routing information for said mobile terminated call (20) that identifies said new MSCNLR (50); and
means for routing said mobile terminated call (20) to said new MSC/VLR (50) for connection of said mobile terminated call (20) to said mobile device (80).

9. A method for delivering a mobile terminated call (20) to a mobile device (80) communicating with a wireless communication network (10), said method comprising:
receiving said mobile terminated call (20) for said mobile device (80), said mobile terminated call (20) having old routing information associated therewith that identifies an old mobile switching center/visitor location register (MSC/VLR) (60) previously serving said mobile device (80); **characterized in that** the method comprises
determining said mobile device (80) is performing a location update to a new MSCNLR (50) prior to connection of said mobile terminated call (20) to said mobile device (80); and enabling said mobile terminated call (20) to be routed to said new MSC/VLR (50) for connection of said mobile terminated call (20) to said mobile device.

10. The method of Claim 9, wherein said determining said mobile device (80) is performing a location update to said new MSC/VLR (50) further comprises:
receiving a cancel location message (330, 630) from a Home Location Register (HLR) (40) associated with said mobile device (80).

11. The method of Claim 10, wherein said receiving said cancel location message (330, 630) further comprises:
receiving said cancel location message (330, 630) during pre-paging of said mobile device (80); and
returning a provide routing number (PRN) acknowledgment message indicating said mobile device (80) is an absent subscriber to said HLR (40).

12. The method of Claim 10, wherein said enabling said mobile terminated call (20) to be routed to said new MSC/VLR (50) further comprises:
determining new routing information for said mobile terminated call (20) that identifies said new MSCNLR (50); and
routing said mobile terminated call (20) to said new MSC/VLR (50) for connection of said mobile terminated call (20) to said mobile device (80).

13. The method of Claim 12, wherein said determining said new routing information for said mobile terminated call (20) further comprises:
sending a send routing information (SRI) message (305, 605) to said HLR (40); and
receiving a SRI acknowledgement message including a mobile station roaming number (MSRN) for said mobile device (80) from said HLR (40).

14. The method of Claim 13, wherein said sending said SRI message to said HLR (40) further comprises:
sending said SRI message without paging said mobile device (80).

15. The method of Claim 13, wherein said sending said SRI message to said HLR (40) further comprises:
stopping paging of said mobile device (80); and
sending said SRI message to said HLR (40).

16. The method of Claim 10, wherein said enabling said mobile terminated call (20) to be routed to said new MSC/VLR (50) further comprises:
sending a resume call handling (RCH) message (635) to a gateway mobile switching center (GMSC) (30) that originally routed said mobile terminated call (20) to said old MSCNLR (60), said RCH message (635) including a roaming retry indicator instructing said GMSC (30) to re-route said mobile terminated call (20) to said new MSC/VLR (50); and
releasing said mobile terminated call (20).

17. The method of Claim 16, wherein said sending said RCH message (635) to said GMSC (30) further comprises:
sending said RCH message (635) without paging said mobile device (80).

18. The method of Claim 16, wherein said sending said RCH message (635) to said GMSC (30) further comprises:
stopping paging of said mobile device (80); and
sending said RCH message (635) to said GMSC (30).

19. The method of Claim 9, wherein said determining said mobile device (80) is performing a location update to said new MSC/VLR (50) further comprises:
receiving a resume call handling (RCH) message (635) at a gateway mobile switching center (GMSC) (30) from said old MSC/VLR (60), said RCH message (635) including a roaming retry indicator instructing said GMSC (30) to re-route said mobile terminated call (20) to said new MSC/VLR (50).

20. The method of Claim 19, wherein said enabling said mobile terminated call (20) to be routed to said new MSC/VLR (50) further comprises:
determining new routing information for said mobile terminated call (20) that identifies said new MSC/VLR (50); and
routing said mobile terminated call (20) to said new MSC/VLR (50) for connection of said mobile terminated call (20) to said mobile device (80).

## Patentansprüche

1. Einrichtung zur Zustellung eines an ein mobiles Endgerät gerichteten Anrufs (20) an eine mobile Vorrichtung (80), welche mit einem drahtlosen Kommunikationsnetzwerk (10) kommuniziert, wobei die besagte Einrichtung umfasst:
Mittel zum Empfangen des besagten an ein mobiles Endgerät gerichteten Anrufs (20) für die besagte mobile Vorrichtung (80), wobei dem besagten an ein mobiles Endgerät gerichteten Anruf (20) alte Routing-Informationen zugeordnet sind, die eine alte mobile Vermittlungsstellelein altes Besucherregister (MSCNLR) (60), welche(s) die besagte mobile Vorrichtung (80) zuvor bedient hat, identifizieren; **dadurch gekennzeichnet, dass** die besagte Einrichtung umfasst:
Mittel zum Ermitteln, ob die besagte mobile Vorrichtung (80) vor der Verbindung des besagten an ein mobiles Endgerät gerichteten Anrufs (20) mit der besagten mobilen Vorrichtung (80) eine Standortaktualisierung zu einer/einem neuen MSCNLR (50) durchführt; und
Mittel zum Ermöglichen der Weiterleitung des besagten an ein mobiles Endgerät gerichteten Anrufs (20) an die/das besagte neue MSCNLR (50) für die Verbindung des besagten an ein mobiles Endgerät gerichteten Anrufs (20) mit der besagten mobilen Vorrichtung (80).

2. Einrichtung nach Anspruch 1, wobei die besagte Einrichtung die/das besagte alte MSCNLR (60) ist.

3. Einrichtung nach Anspruch 1, wobei die besagten Mittel zum Ermitteln, ob die besagte mobile Vorrichtung (80) eine Standortaktualisierung zu der/dem besagten neuen MSCNLR (50) durchführt, weiterhin umfassen:
Mittel zum Empfangen einer Standort-Löschen-Nachricht (330, 630) von einem mit der besagten mobilen Vorrichtung (80) assoziierten Heimatregister (HLR) (40).

4. Einrichtung nach Anspruch 3, wobei die besagten Mittel zum Ermöglichen der Weiterleitung des besagten an ein mobiles Endgerät gerichteten Anrufs (20) an die/das besagte neue MSCNLR (50) weiterhin umfassen:
Mittel zum Bestimmen von neuen Routing-Informationen für den besagten an ein mobiles Endgerät gerichteten Anruf (20), welche die/das besagte neue MSCNLR (50) identifizieren; und
Mittel zum Weiterleiten des besagten an ein mobiles Endgerät gerichteten Anrufs (20) an die/das besagte neue MSC/VLR (50) für die Verbindung des besagten an ein mobiles Endgerät gerichteten Anrufs (20) mit der besagten mobilen Vorrichtung (80).

5. Einrichtung nach Anspruch 3, wobei die besagten Mittel zum Ermöglichen der Weiterleitung des besagten an ein mobiles Endgerät gerichteten Anrufs (20) an die/das besagte neue MSCNLR (50) weiterhin umfasst:
Mittel zum Senden einer Anrufabwicklung-Wiederaufnehmen- bzw. RCH-Nachricht (635) an eine mobile Gateway-Vermittlungsstelle (GMSC) (30), welche den besagten an ein mobiles Endgerät gerichteten Anruf (20) ursprünglich an die/das besagte alte MSC/VLR (60) weitergeleitet hat, wobei die besagte RCH-Nachricht (635) einen Roaming-Neuversuch-Indikator enthält, welcher der besagten GMSC 30) befiehlt, den besagten an ein mobiles Endgerät gerichteten Anruf (20) an die/das besagte neue MSC/VLR (50) umzuleiten; und
Mittel zum Auslösen des besagten an ein mobiles Endgerät gerichteten Anrufs (20).

6. Einrichtung nach Anspruch 1, wobei die besagte Einrichtung eine mobile Gateway-Vermittlungsstelle (GMSC) (30) ist, die mit der/dem besagten alten MSC/VLR (60) und der/dem besagten neuen MSC/VLR (50) in Kommunikation steht.

7. Einrichtung nach Anspruch 6, wobei die besagten Mittel zum Ermitteln, ob die besagte mobile Vorrichtung (80) eine Standortaktualisierung zu der/dem besagten neuen MSC/VLR (50) durchführt, weiterhin umfassen:
Mittel zum Empfangen einer Anrufabwicklung-Wiederaufnehmen- bzw. RCH-Nachricht (635) von der/dem besagten alten MSC/VLR (60), wobei die besagte RCH-Nachricht (635) einen Roaming-Neuversuch-Indikator enthält, welcher der besagten GMSC (30) befiehlt, den besagten an ein mobiles Endgerät gerichteten Anruf (20) an die/das besagte neue MSC/VLR (50) umzuleiten.

8. Einrichtung nach Anspruch 7, wobei die besagten Mittel zum Ermöglichen der Weiterleitung des besagten an ein mobiles Endgerät gerichteten Anrufs (20) an die/das besagte neue MSC/VLR (50) weiterhin umfassen:
Mittel zum Bestimmen von neuen Routing-Informationen für den besagten an ein mobiles Endgerät gerichteten Anruf (20), welche die/das besagte neue MSC/VLR (50) identifizieren; und
Mittel zum Weiterleiten des besagten an ein mobiles Endgerät gerichteten Anrufs (20) an die/das besagte neue MSC/VLR (50) für die Verbindung des besagten an ein mobiles Endgerät gerichteten Anrufs (20) mit der besagten mobilen Vorrichtung (80).

9. Verfahren zur Zustellung eines an ein mobiles Endgerät gerichteten Anrufs (20) an eine mobile Vorrichtung (80), welche mit einem drahtlosen Kommunikationsnetzwerk (10) kommuniziert, wobei das besagte Verfahren umfasst:
Empfangen des besagten an ein mobiles Endgerät gerichteten Anrufs (20) für die besagte mobile Vorrichtung (80), wobei dem besagten an ein mobiles Endgerät gerichteten Anruf (20) alte Routing-Informationen zugeordnet sind, die eine alte mobile Vermittlungsstelle/ein altes Besucherregister (MSC/VLR) (60), welche(s) die besagte mobile Vorrichtung (80) zuvor bedient hat, identifizieren; **dadurch gekennzeichnet, dass** das Verfahren umfasst:
Ermitteln, ob die besagte mobile Vorrichtung (80) vor der Verbindung des besagten an ein mobiles Endgerät gerichteten Anrufs (20) mit der besagten mobilen Vorrichtung (80) eine Standortaktualisierung zu einer/einem neuen MSC/VLR (50) durchführt; und
Ermöglichen der Weiterleitung des besagten an ein mobiles Endgerät gerichteten Anrufs (20) an die/das besagte neue MSC/VLR (50) für die Verbindung des besagten an ein mobiles Endgerät gerichteten Anrufs (20) mit der besagten mobilen Vorrichtung.

10. Verfahren nach Anspruch 9, wobei das besagte Ermitteln, ob die besagte mobile Vorrichtung (80) eine Standortaktualisierung zu der/dem besagten neuen MSC/VLR (50) durchführt, weiterhin umfasst:
Empfangen einer Standort-Löschen-Nachricht (330, 630) von einem mit der besagten mobilen Vorrichtung (80) assoziierten Heimatregister (HLR) (40).

11. Verfahren nach Anspruch 10, wobei das besagte Empfangen der besagten Standort-Löschen-Nachricht (330, 630) weiterhin umfasst:
Empfangen der besagten Standort-Löschen-Nachricht (330, 630) während des Vor-Anpiepens der besagten mobilen Vorrichtung (80); und
Rücksenden einer Routing-Nummer-Bereitstellung bzw. PRN-Bestätigungsnachricht, welche angibt, dass die besagte mobile Vorrichtung (80) ein von dem besagten HLR (40) abwesender Teilnehmer ist.

12. Verfahren nach Anspruch 10, wobei das besagte Ermöglichen der Weiterleitung des besagten an ein mobiles Endgerät gerichteten Anrufs (20) an die/das besagte neue MSCNLR (50) weiterhin umfasst:
Bestimmen von neuen Routing-Informationen für den besagten an ein mobiles Endgerät gerichteten Anrufs (20), welche die/das besagte neue MSC/VLR (50) identifizieren; und
Weiterleiten des besagten an ein mobiles Endgerät gerichteten Anrufs (20) an die/das besagte neue MSC/VLR (50) für die Verbindung des besagten an ein mobiles Endgerät gerichteten Anrufs (20) mit der besagten mobilen Vorrichtung (80).

13. Verfahren nach Anspruch 12, wobei das besagte Bestimmen der besagten neuen Routing-Informationen für den besagten an ein mobiles Endgerät gerichteten Anruf (20) weiterhin umfasst:
Senden einer Routing-Informationen-Senden bzw. SRI-Nachricht (305, 605) an das besagte HLR (40); und
Empfangen einer SRI-Bestätigungsnachricht, welche eine Mobilstations-Roaming-Nummer (MSRN) für die besagte mobile Vorrichtung (80) enthält, von dem besagten HLR (40).

14. Verfahren nach Anspruch 13, wobei das besagte Senden der besagten SRI-Nachricht an das besagte HLR (40) weiterhin umfasst:
Senden der besagten SRI-Nachricht, ohne die besagte mobile Vorrichtung (80) anzupiepen.

15. Verfahren nach Anspruch 13, wobei das besagte Senden der besagten SRI-Nachricht an das besagte HLR (40) weiterhin umfasst:
Einstellen des Anpiepens der besagten mobilen Vorrichtung (80); und
Senden der besagten SRI-Nachricht an das besagte HLR (40).

16. Verfahren nach Anspruch 10, wobei das besagte Ermöglichen der Weiterleitung des besagten an ein mobiles Endgerät gerichteten Anrufs (20) an die/das besagte neue MSC/VLR (50) weiterhin umfasst:
Senden einer einer Anrufabwicklung-Wiederaufnehmen- bzw. RCH-Nachricht (635) an eine mobile Gateway-Vermittlungsstelle (GMSC) (30), welche den besagten an das mobile Endgerät gerichteten Anruf (20) ursprünglich an die/das besagte alte MSC/VLR ursprünglich weitergeleitet hat, wobei die besagte RCH-Nachricht (635) einen Roaming-Neuversuch-Indikator enthält, welcher der besagten GMSC (30) befiehlt, den besagten an ein mobiles Endgerät gerichteten Anruf (20) an die/das besagte neue MSC/VLR (50) umzuleiten; und
Auslösen des besagten an ein mobiles Endgerät gerichteten Anrufs (20).

17. Verfahren nach Anspruch 16, wobei das besagte Senden der besagten RCH-Nachricht (635) an die besagte GMSC (30) weiterhin umfasst:
Senden der besagten RCH Nachricht (635), ohne die besagte mobile Vorrichtung (80) anzupiepen.

18. Verfahren nach Anspruch 16, wobei das besagte Senden der besagten RCH-Nachricht (635) an die besagte GMSC (30) weiterhin umfasst:
Einstellen des Anpiepens der besagten mobilen Vorrichtung (80); und
Senden der besagten RCH-Nachricht (635) an die besagte GMSC (30).

19. Verfahren nach Anspruch 9, wobei das besagte Ermitteln, ob die besagte mobile Vorrichtung (80) eine Standortaktualisierung zu der/dem besagten neuen MSCNLR (50) vornimmt, weiterhin umfasst:
Empfangen einer Anrufabwicklung-Wiederaufnehmen bzw. RCH-Nachricht (635) von der/dem besagten alten MSC/VLR (60) an einer mobilen Gateway-Vermittlungsstelle, wobei die besagte RCH-Nachricht 635) einen Roaming-Neuversuch-Indikator enthält, welcher der besagten GMSC (30) befiehlt, den besagten an ein mobiles Endgerät gerichteten Anruf (20) an die/das besagte neue MSC/VLR (50) umzuleiten.

20. Verfahren nach Anspruch 19, wobei das besagte Ermöglichen der Weiterleitung des besagten an ein mobiles Endgerät gerichteten Anrufs (20) an die/das besagte neue MSC/VLR (50) weiterhin umfasst:
Bestimmen von neuen Routing-Informationen für den besagten an ein mobiles Endgerät gerichteten Anruf (20), welche die/das besagte neue MSCNLR (50) identifizieren; und
Weiterleiten des besagten an ein mobiles Endgerät gerichteten Anrufs (20) an die/das besagte neue MSC/VLR (50) für die Verbindung des besagten an ein mobiles Endgerät gerichteten Anrufs (20) an die besagte mobile Vorrichtung (80).

## Revendications

1. Appareil permettant de délivrer un appel aboutissant à un mobile (20) à un dispositif mobile (80) communiquant avec un réseau de communication sans fil (10), ledit appareil comprenant :
moyens pour recevoir ledit appel aboutissant à un mobile (20) pour ledit dispositif mobile (80), ledit appel aboutissant à un mobile (20) ayant d'anciennes informations d'acheminement associées à celui-ci qui identifient un ancien centre de commutation mobile/enregistreur de localisation des visiteurs (MSC/VLR) (60) desservant précédemment ledit dispositif mobile (80) ; **caractérisé en ce que** ledit appareil comprend :
moyens pour déterminer si ledit dispositif mobile (80) effectue une actualisation de localisation dans un nouveau MSCNLR (50) avant la connexion dudit appel aboutissant à un mobile (20) audit dispositif mobile (80) ; et
moyens permettant audit appel aboutissant à un mobile (20) d'être acheminé vers ledit nouveau MSCNLR (50) pour connecter ledit appel aboutissant à un mobile (20) audit dispositif mobile (80).

2. Appareil selon la revendication 1, dans lequel ledit appareil est ledit ancien MSC/VLR (60).

3. Appareil selon la revendication 1, dans lequel lesdits moyens pour déterminer que ledit dispositif mobile (80) effectue une actualisation de localisation dans ledit nouveau MSCNLR (50) comprennent en outre :
moyens pour recevoir un message d'annulation de localisation (330, 630) provenant d'un enregistreur de localisation nominal (HLR) (40) associé audit dispositif mobile (80).

4. Appareil selon la revendication 3, dans lequel lesdits moyens permettant audit appel aboutissant à un mobile (20) d'être acheminé vers ledit nouveau MSCNLR (50) comprennent en outre :
moyens pour déterminer de nouvelles informations d'acheminement pour ledit appel aboutissant à un mobile (20) qui identifient ledit nouveau MSCNLR (50) ; et
moyens pour acheminer ledit appel aboutissant à un mobile (20) vers ledit nouveau MSCNLR (50) pour connecter ledit appel aboutissant à un mobile (20) audit dispositif mobile (80).

5. Appareil selon la revendication 3, dans lequel lesdits moyens permettant audit appel aboutissant à un mobile (20) d'être acheminé vers ledit nouveau MSCNLR (50) comprennent en outre :
moyens pour envoyer un message Reprendre la gestion d'appel (RCH) (635) à un centre de commutation mobile passerelle (GMSC) (30) qui a acheminé à l'origine ledit appel aboutissant à un mobile (20) vers ledit ancien MSCNLR (60), ledit message RCH (635) comprenant un indicateur de nouvelle tentative d'itinérance indiquant audit GMSC (30) de réacheminer ledit appel aboutissant à un mobile (20) vers ledit nouveau MSC/VLR (50) ; et
moyens pour libérer ledit appel aboutissant à un mobile (20).

6. Appareil selon la revendication 1, dans lequel ledit appareil est un centre de commutation mobile passerelle (GMSC) (30) communiquant avec ledit ancien MSCNLR (60) et ledit nouveau MSC/VLR (50).

7. Appareil selon la revendication 6, dans lequel lesdits moyens pour déterminer que ledit dispositif mobile (80) effectue une actualisation de localisation dans ledit nouveau MSCNLR (50) comprennent en outre :
moyens pour recevoir un message Reprendre la gestion d'appel (RCH) (635) provenant dudit ancien MSCNLR (60), ledit message RCH (635) comprenant un indicateur de nouvelle tentative d'itinérance indiquant audit GMSC (30) de réacheminer ledit appel aboutissant à un mobile (20) vers ledit nouveau MSC/VLR (50).

8. Appareil selon la revendication 7, dans lequel lesdits moyens permettant audit appel aboutissant à un mobile (20) d'être acheminé vers ledit nouveau MSC/VLR (50) comprennent en outre :
moyens pour déterminer de nouvelles informations d'acheminement pour ledit appel aboutissant à un mobile (20) qui identifient ledit nouveau MSC/VLR (50) ; et
moyens pour acheminer ledit appel aboutissant à un mobile (20) vers ledit nouveau MSC/VLR (50) pour connecter ledit appel aboutissant à un mobile (20) audit dispositif mobile (80).

9. Procédé permettant de délivrer un appel aboutissant à un mobile (20) à un dispositif mobile (80) communiquant avec un réseau de communication sans fil (10), ledit procédé comprenant les étapes suivantes :
recevoir ledit appel aboutissant à un mobile (20) pour ledit dispositif mobile (80), ledit appel aboutissant à un mobile (20) ayant d'anciennes informations d'acheminement associées à celui-ci qui identifient un ancien centre de commutation mobile/enregistreur de localisation des visiteurs (MSCNLR) (60) desservant précédemment ledit dispositif mobile (80) ; **caractérisé en ce que** le procédé comprend les étapes suivantes :
déterminer que ledit dispositif mobile (80) effectue une actualisation de localisation dans un nouveau MSCNLR (50) avant la connexion dudit appel aboutissant à un mobile (20) audit dispositif mobile (80) ; et
permettre audit appel aboutissant à un mobile (20) d'être acheminé vers ledit nouveau MSCNLR (50) pour connecter ledit appel aboutissant à un mobile (20) audit dispositif mobile.

10. Procédé selon la revendication 9, dans lequel ladite détermination que ledit dispositif mobile (80) effectue une actualisation de localisation dans ledit nouveau MSCNLR (50) comprend en outre l'étape suivante :
recevoir un message d'annulation de localisation (330, 630) provenant d'un enregistreur de localisation nominal (HLR) (40) associé audit dispositif mobile (80).

11. Procédé selon la revendication 10, dans lequel ladite réception dudit message d'annulation de localisation (330, 630) comprend en outre les étapes suivantes :
recevoir ledit message d'annulation de localisation (330, 630) durant le prétéléavertissement dudit dispositif mobile (80) ; et
renvoyer un message d'accusé de réception Fournir le numéro d'acheminement (PRN) indiquant que ledit dispositif mobile (80) est un abonné absent audit HLR (40).

12. Procédé selon la revendication 10, dans lequel ledit fait de permettre audit appel aboutissant à un mobile (20) d'être acheminé vers ledit nouveau MSCNLR (50) comprend en outre les étapes suivantes :
déterminer de nouvelles informations d'acheminement pour ledit appel aboutissant à un mobile (20) qui identifient ledit nouveau MSC/VLR (50) ; et
acheminer ledit appel aboutissant à un mobile (20) vers ledit nouveau MSC/VLR (50) pour connecter ledit appel aboutissant à un mobile (20) audit dispositif mobile (80).

13. Procédé selon la revendication 12, dans lequel ladite détermination desdites nouvelles informations d'acheminement pour ledit appel aboutissant à un mobile (20) comprend en outre les étapes suivantes :
envoyer un message Envoi d'informations d'acheminement (SRI) (305, 605) audit HLR (40) ; et
recevoir un message d'accusé de réception SRI comprenant un numéro d'itinérance de station mobile (MSRN) pour ledit dispositif mobile (80) provenant dudit HLR (40).

14. Procédé selon la revendication 13, dans lequel ledit envoi dudit message SRI audit HLR (40) comprend en outre l'étape suivante :
envoyer ledit message SRI sans téléavertir ledit dispositif mobile (80).

15. Procédé selon la revendication 13, dans lequel ledit envoi dudit message SRI audit HLR (40) comprend en outre les étapes suivantes :
arrêter de téléavertir ledit dispositif mobile (80) ; et
envoyer ledit message SRI audit HLR (40).

16. Procédé selon la revendication 10, dans lequel ledit fait de permettre audit appel aboutissant à un mobile (20) d'être acheminé vers ledit nouveau MSC/VLR (50) comprend en outre les étapes suivantes :
envoyer un message Reprendre la gestion d'appel (RCH) (635) à un centre de commutation mobile passerelle (GMSC) (30) qui a acheminé à l'origine ledit appel aboutissant à un mobile (20) vers ledit ancien MSC/VLR (60), ledit message RCH (635) comprenant un indicateur de nouvelle tentative d'itinérance indiquant audit GMSC (30) de réacheminer ledit appel aboutissant à un mobile (20) vers ledit nouveau MSC/VLR (50) ; et
libérer ledit appel aboutissant à un mobile (20).

17. Procédé selon la revendication 16, dans lequel ledit envoi dudit message RCH (635) audit GMSC (30) comprend en outre l'étape suivante :
envoyer ledit message RCH (635) sans téléavertir ledit dispositif mobile (80).

18. Procédé selon la revendication 16, dans lequel ledit envoi dudit message RCH (635) audit GMSC (30) comprend en outre les étapes suivantes :
arrêter de téléavertir ledit dispositif mobile (80) ; et
envoyer ledit message RCH (635) audit GMSC (30).

19. Procédé selon la revendication 9, dans lequel ladite détermination que ledit dispositif mobile (80) effectue une actualisation de localisation dans ledit nouveau MSC/VLR (50) comprend en outre l'étape suivante :
recevoir un message Reprendre la gestion d'appel (RCH) (635) au niveau d'un centre de commutation mobile passerelle (GMSC) (30) à partir dudit ancien MSCNLR (60), ledit message RCH (635) comprenant un indicateur de nouvelle tentative d'itinérance indiquant audit GMSC (30) de réacheminer ledit appel aboutissant à un mobile (20) vers ledit nouveau MSCNLR (50).

20. Procédé selon la revendication 19, dans lequel ledit fait de permettre audit appel aboutissant à un mobile (20) d'être acheminé vers ledit nouveau MSCNLR (50) comprend en outre les étapes suivantes :
déterminer de nouvelles informations d'acheminement pour ledit appel aboutissant à un mobile (20) qui identifient ledit nouveau MSCNLR (50) ; et
acheminer ledit appel aboutissant à un mobile (20) vers ledit nouveau MSCNLR (50) pour connecter ledit appel aboutissant à un mobile (20) audit dispositif mobile (80).
